# EUROPÄISCHE PATENTSCHRIFT

(11) **EP 2 422 966 B1**
(45) Veröffentlichungstag und Bekanntmachung des Hinweises auf die Patenterteilung: **08.07.2015**
(21) Anmeldenummer: 10174560.2
(22) Anmeldetag: 30.08.2010
(51) Int. Cl.: B29D 23/00, B29C 35/02, F16L 11/08, F02M 35/10, B29C 47/00, B29C 53/08, B29C 57/04, B32B 1/08

(54) **Verfahren zur Herstellung von Ladeluftschläuchen**
Method for manufacturing charge air hoses
Procédé de fabrication de tuyaux d'air de suralimentation

(43) Veröffentlichungstag der Anmeldung: 29.02.2012
(73) Patentinhaber: ContiTech Schlauch GmbH, 30165 Hannover (DE)
(72) Erfinder: Brettschneider, Ulrich, 37520 Osterode am Harz (DE)
(74) Vertreter: Finger, Karsten

(56) Entgegenhaltungen:
- DE-A1- 10 036 235
- DE-U1-202008 001 196
- US-A- 3 253 618

## Beschreibung

### TECHNISCHES GEBIET DER ERFINDUNG

Die Erfindung betrifft ein Verfahren zur Herstellung von Ladeluftschläuchen für Kraftfahrzeuge. Weiterhin betrifft die Erfindung einen mit einem derartigen Verfahren hergestellten Ladeluftschlauch.

### STAND DER TECHNIK

EP 1 396 670 B1 beschreibt den zunehmenden Trend, in Kraftfahrzeugen die Leistungen der Brennkraftmaschinen durch Einsatz von Vorverdichtern zu erhöhen, die die Einleitung von komprimierter Ladeluft in den Verbrennungsraum der Brennkraftmaschine ermöglichen. Nach der Kompression der Ladeluft wird diese mit einem Ladeluftkühler abgekühlt und anschließend dem Verbrennungsraum zugeführt. Die Führung der Ladeluft zwischen den einzelnen Aggregaten erfolgt über Ladeluftschläuche, die hohen und pulsierenden Druckbeaufschlagungen sowie dynamischen Beanspruchungen in Folge der Anbindung der Ladeluftschläuche an die vibrierenden Aggregate sowie hohen Temperaturen standhalten müssen. Ferner wird eine hohe Ölbeständigkeit, eine gute Haftung einzelner Lagen der Ladeluftschläuche und eine hohe Lebensdauer gefordert. Je nach Einbaubedingungen und den Auslegungen werden unterschiedliche Konstruktionen der Ladeluftschläuche unter Verwendung verschiedener Kautschuktypen eingesetzt. So werden beispielsweise Ladeluftschläuche mit einer Fluorelastomer-Innenschicht, einer darauf aufgebauten peroxidisch vernetzten Silikonelastomer-Schicht, einer Verstärkungslage mit Festigkeitsträgern und einer Silikonelastomer-Außenschicht eingesetzt, wobei die Fluorelastomer-Innenschicht als Sperrschicht dient mit einer geringen Permeationsrate und hoher Wärmebeständigkeit und auf peroxidisch vernetztem Fluorkautschuk basiert, wodurch eine gute Anbindung oder Haftung an die aufliegende Silikonelastomer-Zwischenschicht und damit eine gute Haltbarkeit gewährleistet werden kann. Beschrieben wird weiterhin der Einsatz von Gestricken aus textilen Garnen, wie z. B. aus Meta- oder Para-Aramiden oder anderen Garnen, die über eine ausreichend hohe Festigkeit und Temperaturbeständigkeit verfügen, für die Verstärkungslage aus Festigkeitsträgern. Die Druckschrift schlägt vor, für einen Ladeluftschlauch eine Fluorelastomer-Innenschicht einzusetzen, die sowohl bisphenolisch als auch peroxidisch vernetzt ist, womit eine verbesserte Bindung zwischen Fluorelastomer-Innenschicht und Silikonelastomer-Zwischenschicht erreicht werden kann. Die Fluorelastomere sind vernetzte Fluorkautschuke (FKM), wobei die Fluorkautschuke durch Co- oder Terpolymerisation der folgenden Monomere erhalten werden können: Vinylidenfluorid (VF₂), Hexafluorpropylen (HFP), Tetrafluorethylen (TFE), 1-Hydropentafluorpropylen (HFPE), Perfluor(methylvinylether) (FMVE). Zusätzlich können Monomere mit reaktionsfähigen Gruppen in die Polymerkette eingebaut werden, um die Vernetzung zu erleichtern. Als peroxidische Vernetzungschemikalien sollen alle dem Fachmann für die Fluorkautschukvernetzung bekannten organischen Peroxide, z. B. 2,5-Dimethyl, 2,5-di-tbutylperoxyhexan oder Dicumylperoxid, die in der Regel mit geeigneten Coaktivatioren, z. B. Tiallylsocyanurat, eingesetzt werden, verwendet werden. Als bisphenolische Vernetzungssysteme kann man ebenfalls sämtliche für die Vernetzung von Fluorkautschuken bekannten Systeme, z. B. mit Bisphenol A oder AF, verwenden, wobei die Systeme üblicherweise aus dem Vernetzungsmittel (Bisphenol), einem Beschleuniger (z. B. Phosphoniumsalz) und einer Base (z. B. Kombination aus Calciumhydroxid und Magnesiumoxid) bestehen. Es sind auch Fluorkautschuke erhältlich, bei denen das bisphenolische Vernetzungssystem mit in den Kautschuk integriert ist. Die Druckschrift schlägt des Weiteren vor, als Elastomer-Außenschicht eine peroxidisch vernetzte Silikonelastomer-Außenschicht einzusetzen, die bei der Vulkanisation eine optimale Verbindung mit der die Verstärkungslage zum Teil durchdringenden Silikonelastomer-Zwischenschicht ermöglicht. Vorgeschlagen wird auch, in dem Ladeluftschlauch ein Wickelverfahren zur Bildung der Verstärkungslage einzusetzen. Eine Anbindung der Ladeluftschläuche an die zugeordneten Aggregate des Kraftfahrzeugs soll durch sogenannte Henn-Kupplungen erfolgen.

DE 10 2004 051 073 A1 baut auf der Annahme auf, dass für dynamisch hoch belastete Ladeluftschläuche die Fertigung aus Garnen mit endlosen Filamenten erfolgen muss, während nur Schläuche, die nicht dynamisch belastet werden, mit Festigkeitsträgern in Form von Gewebebändern aus Kurzfaserstapelgarnen mit einer Filamentlänge von 10 bis 60 mm verstärkt werden, was für die dynamisch hoch belasteten Ladeluftschläuche, die eine komplizierte Geometrie besitzen können, nicht geeignet sein soll, da auf diese Weise keine ausreichende Festigkeit erzeugt werden soll. Die Druckschrift schlägt vor, die textilen Festigkeitsträger mit einem meta-Aramid-Garn oder -Zwirn des Typs "stretch broken" aus Filamenten mit einer Länge von 200 bis 1400 mm zu bilden, wobei die Feinheit der Garne oder Zwirne 1000 bis 10.000 dtex, vorzugsweise 3000 bis 8000 dtex, beträgt. Garne oder Zwirne des Typs "stretch broken" sind aus vielen Einzelfilamenten gesponnene Garne oder Zwirne, die dann fixiert und im Anschluss auseinandergezogen werden. Hierdurch reißen die Filamente in undefinierter Weise und ragen zum Teil aus dem Garn oder Zwirn heraus. Die meta-Aramidgarne vom Typ "stretch broken" besitzen eine hohe Festigkeit und Temperaturbeständigkeit sowie einen Elastizitätsmodul, der im Dehnungsbereich bis ca. 8 % bei einer Temperatur von 200 °C niedriger ist als bei Meta-Aramid-Garnen aus endlosen Filamenten. Im Arbeitsbereich der Elastomerprodukte ist der Elastizitätsmodul von eingebettetem Elastomer und eingebettetem Garn etwa angeglichen. Auf diese Weise wird ein Einschneiden des Festigkeitsträgers beim Gebrauch in das Elastomer verringert, was letztendlich zur Erhöhung der Lebensdauer der Produkte führen soll. Erwähnt wird, dass in einem Ladeluftschlauch zumindest eine zwischen Elastomerlagen vorliegende Verstärkungslage aus den textilen Festigkeitsträgern in Form von "stretch broken" Garnen vorhanden sein kann. Die Verstärkungslage kann als Gestrick ausgebildet sein. Die Elastomerlagen des Ladeluftschlauches können auf hydriertem Nitrilkautschuk, Silikonkautschuk, Fluorkautschuk oder Acrylatkautschuk basieren. Neben der Gestricklage und den eingebetteten Elastomerlagen kann der Ladeluftschlauch noch weitere Lagen und Schichten aufweisen, wie z. B. weitere Innen- und Außenschichten bzw. -lagen aus unterschiedlichen polymeren Werkstoffen. Eine Herstellung des Ladeluftschlauches erfolgt mit üblichen Verfahren, beispielsweise indem auf eine extrudierte Kautschukmischungs-Innenschicht die Festigkeitsträgerlage mittels geeigneter Verfahren und anschließend im Extrusionsverfahren die Kautschukmischungs-Außenschicht aufgebracht werden. Im Anschluss wird der Schlauch mit üblichen Verfahren vulkanisiert.

Die nicht gattungsgemäße Druckschrift DE 34 45 282 A1 betrifft ein geradliniges Leitungsrohr für eine unterirdische Verlegung durch Betonschalen. für eine Ausführungsform sind in dem Leitungsrohr zwei nicht koaxiale, parallel zueinander orientierte Rohre umschäumt und außenliegend durch ein äußeres Rohr geschützt. Sowohl die innenliegenden Rohre als auch das äußere Rohr sind aus Kunststoff mit einer Verstärkung aus Fasergestrick hergestellt. Die Herstellung erfolgt durch Aufbringung einzelner Lagen auf einen als Halbzeug bereitgestellten Inliner, welcher ein Kernrohr darstellt. Das Leitungsrohr dient einem wärmegedämmten Transport gasförmiger und flüssiger Medien, bei welchem neben der Wärmedämmung die Dichtigkeit im Vordergrund steht, aber keine thermische oder dynamische Beanspruchung des Leitungsrohres erfolgt.

Auch GB 1,146,872 betrifft einen nicht gattungsgemäßen Schlauch, nämlich einen geraden Schlauch für Hydraulikanwendungen mit im Wesentlichen statischen Drücken bis zu 17,5 bar. Die Fertigung erfolgt durch Extrusion auf einem Dorn. Der Schlauch besitzt einen Innendurchmesser von 6,3 mm, während der Außendurchmesser 14,7 mm beträgt. Als Verstärkungslage eingesetzt wird ein Geflecht aus individuell durch Extrusion mit einem thermoplastischen Material, Gummi, PVC ummantelten Monofilamenten aus Nylon, Reyon, Polyethylenterephthalat oder Polyropylen, wobei das erstellte Geflecht dann durch "Verbacken" der Ummantelung miteinander verklebt wird.

Auch DE 602 03 782 T2 betrifft einen nicht gattungsgemäßen geraden Schlauch zur Beförderung von Fluiden unter Druck, welcher auf einem Kernrohr gefertigt wird und thermoplastisch verstärkt ist. Der Schlauch findet Einsatz für mobile und industrielle hydraulische Anwendungen mit Drücken bis zu 82,7 MPa. Das Kernrohr kann mehrschichtig ausgebildet sein mit einer inneren Schicht oder Auskleidung mit einer hohen chemischen Widerstandsfähigkeit zur Verhinderung eines Anschwellens, einer Craze-Bildung, einem Spannungsreißen, Korrosion und einem Widerstand gegenüber Angriffen von schwach sauren oder alkalinen Lösungen, Phosphat-Ester-Lösungen und -Alkoholen sowie organischen Lösemitteln, Kohlenwasserstoffen oder anorganischen Lösemitteln. In den Rohrwandungen sind 2 bis 8 oder mehr Verstärkungsschichten über dem Kernrohr angeordnet, die jeweils auf herkömmliche Weise geflochten, gestrickt oder verpackt sein können. Dargestellt sind Ausführungsbeispiele mit spiralenförmigen schraubenförmigen Wicklungen mit entgegengesetzt orientierten Spiralwicklungen. Das Garn wird schraubenförmig unter Spannung in eine Richtung gewickelt, d. h. entweder links herum oder rechts herum, während die nächste, unmittelbar darauf folgende Schicht in die entgegengesetzte Richtung gewickelt wird. Vorgeschlagen wird auch eine Variation der Drehung der Wicklung, womit eine Biegeermüdungs- und Druckfestigkeit des Schlauches sowie die Kosten optimiert werden sollen. Zur Verringerung der axialen Dehnung für Hochdruckanwendungen muss der Winkel der spiralförmigen Wicklung optimiert werden in einem Winkelbereich von 40° bis 65° mit einem Optimum bei 54,7°, womit ein "neutraler Nickwinkel" gebildet sein soll. Die einzelnen Wicklungen liegen unmittelbar aufeinander. Zwischen einzelnen Schichten kommt ein Haftvermittler zum Einsatz.

US 2006/0223399 A1 offenbart einen auf einem Dorn gefertigten Schlauch, der offensichtlich für Hydraulikanwendungen bestimmt ist. Eine einzige Faser wird hier auf ein extrudiertes, nicht vulkanisiertes Rohr entweder geflochten oder spiralförmig gewickelt zur Bildung einer faserverstärkten Lage. Nach der Aufbringung einer Zwischenschicht auf diese Verstärkungslage wird eine weitere Faser spitalförmig gewunden und in die Umfangsfläche der Zwischenschicht eingepresst.

US 5,077,018 offenbart einen Schlauch, in welchem eine mit einem Tauchüberzug versehene Faser Einsatz findet. Die Fertigung des Schlauches erfolgt auf einem Dorn, der eine geradlinige Längsachse und einen konstanten Querschnitt des Endprodukts vorgibt. Dargesiellt ist ein Ausführungsbeispiel mit zwei Verstärkungslagen aus geflochtenen Fasern.

Die DE 20 2008 001196 U1 betrifft eine Fertigungsanlage zur Herstellung von Gummischläuchen, enthaltend die nacheinander im Laufe des technologischen Prozesses installierten und miteinander verbundenen Einrichtungen, einen Extruder zur Formung einer inneren Gummischicht, zwei Durchmesser-Messgeräte, eine Strickmaschine, einen Extruder zur Formung einer äußeren Gummischicht, eine Kühleinrichtung, eine Schneideeinrichtung und eine Vulkanisieranlage, wobei als Kühleinrichtung wenigstens eine Kühltrommel eingesetzt wird.

Die US 3,253,618 betrifft einen Schlauch aus Kunststoffmaterial mit der Eigenschaft eines elastischen Speichers und mit einer gestrickten Verstärkung. Das elastische Speichermaterial kann mit einem schmelzbaren Element vereinigt sein, wobei der Schmelzpunkt von diesem Element niedriger als der Schmelzpunkt des synthetischen Kunststoffs ist, der die Eigenschaft eines elastischen Speichers besitzt. Das elastische Speichermaterial kann ein extrudiertes Rohr sein, wobei das schmelzbare Element auf dessen innerer oder äußerer Oberfläche mit der gestrickten Verstärkung auf der inneren oder äußeren Oberfläche oder innerhalb des Verbundelements angeordnet ist.

Die DE 100 36 235 A1 betrifft eine Medienleitung aus gummiartigem Kunststoff, insbesondere einen Kühlwasserschlauch. Der Kühlwasserschlauch besteht aus einem gummiartigen Kunststoff und ist im Bereich seiner Krümmungen mit einem Verstärkungsschlauch versehen, der entweder nachträglich außen auf den Kühlwasserschlauch aufgebracht oder als Einlegeteil in die Wand des Kühlwasserschlauchs eingebettet ist. Die Verstärkungsschläuche können als Geflecht, Gewebe, Gestrick oder Gewirk ausgebildet sein und erhöhen die Druckfestigkeit in den kritischen Bereichen des Kühlwasserschlauchs.

### AUFGABE DER ERFINDUNG

Der Erfindung liegt die Aufgabe zugrunde, ein Verfahren zu Herstellung eines Ladeluftschlauches vorzuschlagen, der insbesondere hinsichtlich
- dynamischer Bewegungs- und Druckbelastungen,
- der Temperaturbelastung,
- der Formgebung und Formstabilität im Betrieb,
- der Druckfestigkeit,
- der funktionssicheren Anbindung an benachbarte Aggregate und/oder
- der Schalldämpfung
verbessert ist.

### LÖSUNG

Die Aufgabe der Erfindung wird erfindunasgemäß mit einem Verfahren mit den Merkmalen des unabhängigen Patentanspruchs 1 gelöst. Weitere Ausgestaltungen des erfindungsgemäßen Verfahrens ergeben sich entsprechend den abhängigen Patentansprüchen 2 bis 13. Ergebnis des erfindungsgemäßen Verfahrens ist ein Ladeluftschlauch mit den Merkmalen des Patentanspruchs 14.

### BESCHREIBUNG DER ERFINDUNG

Die Erfindung betrifft ein Verfahren zur Fertigung eines besonderen Schlauches, nämlich eines Ladeluftschlauches für Kraftfahrzeuge, welcher speziellen Anforderungen hinsichtlich Fertigung und den im Betrieb wirkenden Beanspruchungen genügen muss, so dass dieser nicht vergleichbar ist mit einem Hydraulikschlauch, einem Leitungsrohr u. ä..

In dem erfindungsgemäßen Verfahren wird zunächst in einem Extrusionsverfahren ein kontinuierlicher Inliner hergestellt, wobei dessen zylindrische Innenfläche dornlos pneumatisch geformt wird, auf einen Durchmesser D₁ (Angabe bezieht sich auf Durchmesser bei Abkühlung auf Raumtemperatur) gebracht und/oder auf diesem gehalten wird. Somit findet erfindungsgemäß kein Aufbringen des Inliners (und der Folgelagen) auf einem Dorn statt, was komplizierte Fertigungsabläufe mit der Vor- und Rückförderung eines Dornes und mit einer Trennung von Schlauch und Dorn entbehrlich macht und unter Umständen erst eine kontinuierliche Fertigung ermöglicht. Andererseits nimmt die Erfindung billigend in Kauf, dass die formgebende und abstützende Wirkung eines Dorns in dem erfindungsgemäßen Verfahren für die Erzeugung der einzelnen Lagen oder Schichten des Ladeluftschlauches nicht genutzt werden kann.

Der Fachmann hat abweichend zur vorliegenden Erfindung bisher favorisiert, für Ladeluftschläuche textile Verstärkungslagen und Garne unter hoher Vorspannung auf eine innenliegende Elastomerlage aufzubringen. Grund hierfür ist, dass sich die Verstärkungslage oder das Garn in die Elastomerlage "einbetten" soll, was durch die hohe Vorspannung gefördert wird. Weiterhin kann die Vorspannung zu einer gewünschten Versteifung des Ladeluftschlauches führen. Schließlich kann bei Aufbringung der Verstärkungslage unter Vorspannung vermieden werden, dass Teilgarnbereiche lose in dem Ladeluftschlauch, beispielsweise zwischen einzelnen Knoten liegen, während andere Teilgarnbereiche bereits gespannt sind oder bei dynamischer Beanspruchung früher gespannt sind. Dies hat einerseits zur Folge, dass das in dem Ladeluftschlauch angeordnete Garn erst dann voll zur Wirkung kommt, wenn im Betrieb eine hinreichende Verformung des Ladeluftschlauches erfolgt derart, dass sämtliche Teilgarnbereiche gespannt sind. Zum anderen ergibt sich bei der Beanspruchung von Ladeluftschläuchen mit teilweise nicht gespannten Garnbereichen sowie teilweise gespannten Garnbereichen ungleichmäßiges Steifigkeitsverhalten und damit Dehnungsverhalten in dem Schlauchmaterial, was zu erhöhten Beanspruchungen des Schlauchmaterials, insbesondere in Folge von entstehenden Scherspannungen, führt.

Trotz dieser dem Fachmann bekannten Vorteile für die Aufbringung von textilen Verstärkungslagen unter hoher Vorspannung auf eine an einem Dorn als Widerlager für die Vorspannung abgestützten Elastomerlage nimmt die Erfindung die dornlose kontinuierliche Fertigung mit pneumatischer Unterstützung in Kauf, um die Fertigung vereinfachen zu können. Die vom Fachmann vermuteten Nachteile der dornlosen Fertigung beseitigt die erfindungsgemäße Ausgestaltung des Verfahrens durch noch im Folgenden näher zu erläuternde Maßnahmen. Unter "dornlos pneumatisch geformt", auf einen Durchmesser gebracht und/oder auf diesem gehalten wird auch eine pneumatische Aufrechterhaltung und/oder Abstützung einer zylindrischen Innenfläche des Inliners verstanden nach vorheriger Formgebung durch anderweitige Maßnahmen, beispielsweise im Austrittsbereich aus dem Extruder.

Erfindungsgemäß muss somit auch nicht ein Inliner in Form eines Halbzeugs oder vorgefertigten Kernrohrs für das Herstellverfahren bereitgestellt und in den Verfahrensablauf integriert werden. Neben der ersichtlichen Verfahrensvereinfachung durch Fertigung des Inliners in einem kontinuierlichen Extrusionsverfahren ermöglicht die Erfindung unter Umständen auch die Erweiterung der Möglichkeiten für die Herstellung und die Materialwahl für den Inliner.

In dem erfindungsgemäßen Verfahren wird ein kontinuierlicher Ladeluftschlauchstrang gebildet, in dem sukzessive, koaxial und kontinuierlich
- eine elastomere Innenlage,
- eine erste Gestricklage,
- eine elastomere Zwischenlage,
- eine zweite Gestricklage und
- eine elastomere Außenlage
auf den Inliner aufgebracht werden. Es versteht sich, dass zusätzlich zu den genannten Schichten beliebige weitere Schichten oder Lagen in den Ladeluftschlauchstrang integriert sein können oder an diesen angebunden sein können, ohne dass dieses zwingend der Fall ist.

Erfindungsgemäß findet des Weiteren nicht ausschließlich eine Verstärkungslage in Form einer Wicklung oder eines Geflechts Einsatz. Vielmehr findet erfindungsgemäß ein Gestrick Einsatz. Dieser Ausgestaltung liegt die Erkenntnis zugrunde, dass die Verwendung einer spiralförmigen Wicklung, welche nicht zu einer Bindung zwischen benachbarten Gängen der Wicklung führt, oder eines Geflechts nur in begrenztem Ausmaß Durchmesserveränderungen im Betrieb oder während des Herstellungsverfahrens ermöglicht. Grund hierfür ist, dass für ein Geflecht oder eine reine spiralförmige Wicklung eine Durchmesseränderung eine Längung des Garns erfordern würde. Hier stellen die Maschen bildenden Teilfadenbereiche des erfindungsgemäß eingesetzten Gestricks eine Art "überschüssiges Material" dar, welches auch Durchmesserveränderungen bis hin zu Durchmessersprüngen ermöglichen kann, so dass in einer Vulkanisierstation auch komplexe räumlich Ladeluftschlauch-Strukturen gebildet werden können und/oder Durchmesser-Aufweitungen erfolgen können.

Erfindungsgemäß findet allerdings nicht lediglich eine einzige Gestricklage Einsatz, sondern es ist eine erste Gestricklage sowie eine zweite Gestricklage in dem Ladeluftschlauch vorhanden. Versuche des Anmelders haben gezeigt, dass eine Verteilung derselben Garnmenge auf zwei Gestricklagen gegenüber der Verteilung derselben Garnmenge auf nur eine Gestricklage bei einer Lebensdauerprüfung zu deutlich höheren Laufzeiten führt. Entsprechend kann bei Einsatz der beiden Gestricklagen und gleichen Anforderungen an die Lebensdauer gegenüber der Verwendung lediglich einer Gestricklage ein deutlich verringerter Garneinsatz erfolgen, was letztendlich zu einer Kostenersparnis führt. Auch kann durch den Einsatz von zwei Gestricklagen unter Umständen die Masse oder Wandstärke des Ladeluftschlauches vermindert werden, wobei dies nicht zwingend so sein muss.

Ein weiterer Vorteil der Verwendung von zwei Gestricklagen anstelle einer Gestricklage mit einem dickeren Garn ist, dass sich in dem dickeren Garn, welches für ein einlagiges Gestrick verwendet werden müsste, auch dickere Schlaufenknoten bilden. Die Knoten stellen aber in dem Ladeluftschlauch Inhomogenitäten dar, welche bei dynamischer Beanspruchung und unter wechselnder Druck- und Zugbelastung in Folge ihrer Eigenbewegung das umgebende Material von innen heraus zerstören können. Der Einsatz von zwei Gestricklagen ermöglicht den Einsatz eines Garns mit verringerter Garndicke, was zu kleineren Schlaufenknoten führt, wodurch die vorgenannten unerwünschten Effekte einer Materialzerstörung zumindest vermindert werden. Versuche des Anmelders haben gezeigt, dass die erläuterte Verringerung der Garndicke auf eine Verlängerung der Lebensdauer um bis zu einem Faktor 2 führen kann.

Ein weiterer Vorteil der erfindungsgemäßen Ausgestaltung ist, dass die Erhöhung der Zahl der Lagen zur Folge hat, dass ein Rissfortschritt in dem Ladeluftschlauch in radialer Richtung gebremst wird. Lediglich beispielhaft kann das anhand des Beispiel erläutert werden, dass bei Einbringen eines Risses oder eines Schnittes in die Außenlage ein Rissfortschritt zunächst durch die zweite Gestricklage gebremst ist und sich nicht fortpflanzen kann, so dass noch die Innenlage und die Zwischenlage als Elastomerlagen (und die beiden Gestricklagen) die mechanische Festigkeit des Ladeluftschlauches gewährleisten können.

Bei der Erstellung der Gestricke in bekannten Strickmaschinen wird das Garn grundsätzlich spiralförmig um die benachbarte Innenlage geführt, wobei im Gegensatz zu der Erstellung einer einfachen Wicklung, beispielsweise mittels sogenannter Zungennadeln, die Erstellung von Maschen, also die Vernetzung und Verknotung mit benachbarten Windungen, erfolgt. Ohne eine grundsätzliche spiralförmige Orientierung kann die Herstellung der Gestricklagen in dem kontinuierlichen Prozess nicht erfolgen. Die Erfindung hat erstmalig erkannt, dass nachteilig an einer derartigen grundsätzlichen spiralförmigen Ausrichtung des Gestrickes ist, dass sich bei den im Betrieb wirkenden Beanspruchungen der Ladeluftschläuche, insbesondere den Druckpulsationen und den Vibrationen der benachbarten Aggregate, infolge der spiralförmigen Ausbildung ein anisotropes Materialverhalten ergeben kann, welches zur Folge hat, dass sich die Form des gekrümmten Ladeluftschlauches je nach mechanischem Beanspruchungszustand verändert, was unerwünscht ist. Vom Automobilhersteller sind vielmehr konturstabile Schläuche gefordert, da die vorhandenen Einbauverhältnisse im Motorraum immer enger werden und das Risiko eines kritischen Kontaktes des Ladeluftschlauches mit einem bewegten, scheuernden und unter Umständen heißen benachbarten Aggregat zu minimieren ist.

Erfindungsgemäß wird die Formstabilität des Ladeluftschlauches erhöht, indem die erste Gestricklage und die zweite Gestricklage mit unterschiedlichen Orientierungen der spiralförmigen Verlegung gefertigt werden. Vereinfacht gesagt werden für die Fertigung der ersten und zweiten Gestricklage gleich betriebene herkömmliche Strickmaschinen in unterschiedliche Richtungen durchlaufen, wobei natürlich auch möglich ist, dass die Strickmaschinen zur Fertigung der unterschiedlichen Orientierungen unterschiedlich ausgebildet oder angesteuert werden, also beispielsweise in gleicher Richtung durchlaufen werden, aber mit unterschiedlichem Drehsinn spiralförmig umstrickt werden.

Weiterhin wird in dem erfindungsgemäßen kontinuierlichen Herstellungsverfahren die erste Gestricklage und die zweite Gestricklage aus einem endlosen Garn hergestellt. Dieser Ausgestaltung liegt insbesondere die Erkenntnis zu Grunde, dass der Einsatz eines "stretch broken"-Garns gemäß DE 10 2004 051 073 A1 nicht erforderlich ist.

Ist der kontinuierliche Ladeluftschlauchstrang mit den zuvor genannten Lagen gefertigt, erfolgt ein Ablängen der einzelnen Ladeluftschlauchrohlinge. Die Ladeluftschlauchrohlinge werden dann auf einem Dorn, beispielsweise unter Temperatureinwirkung und in einer Vulkanisierstation, geformt. Hier kann auch die Überführung in die Form mit gekrümmter Längsachse entsprechend der im Motorraum gewünschten Form und ggf. die Herbeiführung von veränderlichen Querschnitten erfolgen. Entscheidend bei dem erfindungsgemäßen Verfahren ist aber, dass der Dorn, mittels dessen der Ladeluftschlauchrohling geformt wird, zumindest einen Längsabschnitt besitzt, dessen Durchmesser D₂ (Angabe bezieht sich auf den Durchmesser bei Raumtemperatur) größer ist als der Durchmesser D₁ (Angabe bezieht sich ebenfalls auf den Durchmesser bei Raumtemperatur) des Inliners. Somit wird erfindungsgemäß mit der Formgebung durch den Dorn der Ladeluftschlauchrohling aufgeweitet. Dieser Aufweitungsprozess trägt der eingangs erläuterten Tatsache Rechnung, dass der Ladeluftschlauchstrang dornlos gefertigt ist und die Gestricklagen nur mit einer begrenzten Vorspannung auf die innenliegenden und nicht am Dorn abgestützten Lagen aufgebracht sind. Das verhältnismäßig lose Gestrick wird durch die erfindungsgemäße Aufweitung gespannt, so dass nicht oder ungenügend vorgespannte Teilgarnbereiche infolge der Aufweitung beseitigt werden. Über das Ausmaß der Aufweitung kann das Ausmaß der Vorspannung des Gestricks in dem Ladeluftschlauchrohling vorgegeben werden. Gemäß der erfindungsgemäßen Ausgestaltung ist der Dorn um mindestens 6 % größer als der Durchmesser D₁. Beispielsweise kann der Dorn auch um mindestens 8 %, 10 %, 12 %, 15 % oder sogar um mindestens 20 % größer sein als der Durchmesser D₁. Vorzugsweise erfolgt die Aufweitung in diesem Mindestausmaß über die gesamte Längserstreckung des Ladeluftschlauches. Mittels der Aufweitung im Bereich des Dornes kann u. U., insbesondere bei gleichzeitiger Erwärmung, auch die Einbettung der Gestricklagen in die benachbarten Elastomerlagen verbessert werden.

Es hat sich herausgestellt, dass der mit dem erfindungsgemäßen Verfahren hergestellte Ladeluftschlauch auch vorteilhaft hinsichtlich der Akustik des gesamten Turboladersystems, in welchem der Ladeluftschlauch eingesetzt ist, wirken kann. Der Ladeluftschlauch arbeitet in der Regel in der direkten Nachbarschaft zu dem im Betrieb sehr geräuschintensiven Turbolader. Dabei wirkt der Ladeluftschlauch gemäß dem Stand der Technik ähnlich einem Resonanzkörper, so dass dieser einen unangenehmen Pfeifton des Turboladers in die Umgebung und in den Fahrgastraum abstrahlt, was in den meisten Fällen den Einsatz eines zusätzlichen Schalldämpfers unumgänglich macht. Der erfindungsgemäß gefertigte Ladeluftschlauch mit den zwei Gestricklagen und zugeordneten Elastomerlagen hat sich als vorteilhaft hinsichtlich der Akustik herausgestellt, da die Vielzahl der unterschiedlichen Lagen und die Gestricklagen zu einer erhöhten Dämpfung führen, womit unter Umständen auch auf einen zusätzlichen Schalldämpfer in dem Turboladersystem verzichtet werden kann. Möglich ist, dass in Folge der beiden Gestricklagen eine Aufsplittung der Anregungsfrequenz von dem Turbolader erfolgt, so dass die unerwünschte Schwingungsenergie des Turboladers aufgeteilt wird auf eine Vielzahl von Frequenzen, deren Schallpegel dann vermindert ist.

Der erfindungsgemäße Ladeluftschlauch verfügt über verbesserte dynamische Eigenschaften und verbesserte Aufnahmemöglichkeiten für die wirkende pulsierende Druckbelastung. Der erfindungsgemäße Ladeluftschlauch kann, bei geeigneter Wahl der eingesetzten Materialien, temperaturbeständig sein hinsichtlich Temperaturen von bis zu 230°C oder mehr. Der erfindungsgemäße Ladeluftschlauch kann auch durch entsprechende Formgebung im Bereich des Dorns im Bereich einer Vulkanisierstation mit beliebigen Konturverläufen ausgestattet sein. Durch Variation der Aufweitung über die Längserstreckung kann des Weiteren auch eine Variation des Streitigkeitsverhaltens über die Längsachse herbeigeführt werden, sofern dies gewünscht ist. Weiterhin kann durch die erfindungsgemäße Ausgestaltung unter Umständen auch die Anbindung des Ladeluftschlauches an die benachbarten Bauelemente oder an die zugeordneten Kupplungen oder Stutzen verbessert werden, da eine Krafteinleitung und - übertragung über die unterschiedlichen Lagen und die beiden Gestricklagen erfolgen kann.

Der Inliner ist vorzugsweise derart ausgebildet, dass dieser eine innere Oberfläche des späteren Ladeluftschlauches bereitstellt, welche unempfindlich ist gegenüber den in dem Ladeluftschlauch geführten Medien, insbesondere auch gegenüber Dieselöl, Schmierstoffen oder Verbrennungsresten der Brennkraftmaschine.

Grundsätzlich möglich ist, dass die Ladeluftschlauchrohlinge unmittelbar im Fertigungsprozess an Flansche, Stutzen oder ähnliches angebunden oder anvulkanisiert werden oder die Endbereiche der Ladeluftschlauchrohlinge bereits derart durch zusätzliche Formgebung vorbereitet werden, dass diese mit Kupplungen, Flanschen oder Stutzen verbunden werden können. Gemäß einem weiteren Vorschlag der Erfindung erfolgt allerdings in den Endbereichen der Ladeluftschlauchrohlinge eine materialabhebende Nachbearbeitung. Mit dieser materialabhebenden Nachbearbeitung wird der Außendurchmesser des Endbereichs des ausvulkanisierten Ladeluftschlauchrohlings auf einen gewünschten Kupplungsdurchmesser verändert. Darüber hinaus kann mittels der Nachbearbeitung eine etwaige Unrundheit des Ladeluftschlauches im Endbereich beseitigt werden. Erfindungsgemäß wird mittels der materialabhebenden Nachbearbeitung insbesondere eine Schicht der Außenlage beseitigt, deren Dicke größer als 0,1 mm, beispielsweise größer als 0,2 mm, 0,4 mm, 0,8 mm oder 1,2 mm ist.

Während grundsätzlich möglich ist, dass eine Anbindung benachbarter Lagen unter Einsatz eines Haftvermittlers erfolgt, wird in weiterer Ausgestaltung der Erfindung zur Verfahrensvereinfachung vorgeschlagen, dass die Anbindung des Inliners, der elastomeren Innenlage, der ersten Gestricklage, der elastomeren Zwischenlage, der zweiten Gestricklage und/oder der elastomeren Außenlage ohne Einsatz eines Haftvermittlers erfolgt.

Während als Material für den Inliner grundsätzlich jedes Material eingesetzt werden kann, welches dauerhaft den im Betrieb im Kraftfahrzeug wirkenden Medien, wie bspw. Verbrennungsrückständen und Öl ausgesetzt werden kann, hat sich der Einsatz eines FPM-Materials für den Inliner als vorteilhaft herausgestellt.

Auch für die Innenlage, die Zwischenlage und die Außenlage kann grundsätzlich ein beliebiges Material, insbesondere Elastomermaterial, eingesetzt werden. In bevorzugter Ausgestaltung sind allerdings die Innenlage, die Zwischenlage und/oder die Außenlage aus einem Silikonmaterial extrudiert.

Bereits zuvor wurde die mögliche Bedeutung der Dicke der ersten und/oder zweiten Gestricklage erläutert. Während grundsätzlich die Verwendung von Filamenten, Filamentbündeln oder Garnen beliebiger Dicke und beliebigen Aufbaus für die erste und/oder zweite Gestricklage möglich ist, haben Versuche des Anmelders gezeigt, dass besonders vorteilhaft ist, wenn die erste und/oder die zweite Gestricklage eine Dicke im Bereich von 0,4 bis 0,6 mm besitzt. Ebenfalls möglich ist, dass zwei Gestricklagen eingesetzt werden mit jeweils 3000 bis 6000 dtex, beispielsweise 5000 bis 5500 detex, so dass sich für beide Gestricklagen zusammen mehr als 10000 dtex ergeben können.

Für die Gestricklagen können mit üblichen Strickmaschinen herstellbare Gestrickmuster Einsatz finden. In bevorzugter Ausgestaltung handelt es sich bei der ersten und/oder zweiten Gestricklage aber um ein Plainstitch-Gestrick oder um ein Lockstitch-Gestrick.

Während beliebige Gestaltungen der Durchmesserverhältnisse und der Dicken der einzelnen Lagen möglich sind, hat sich als besonders vorteilhaft hinsichtlich der dynamischen Eigenschaften, der Akustik, der Konturstabilität, der mechanischen Festigkeit und/oder der Lebensdauer erwiesen, wenn der Inliner eine Wandstärke von 1,2 mm besitzt, die Innenlage eine Wandstärke von 1,1 mm besitzt, die Zwischenlage eine Wandstärke von 1,0 mm besitzt und die Außenlage eine Wandstärke von 1,5 mm besitzt. Hiervon umfasst sein sollen aber auch abweichende Wandstärken des Inliners, der Innenlage, der Zwischenlage und der Außenlage, die maximal um 20 % von den vorgenannten Wandstärken abweichen.

Eine weitere Ausgestaltung der Erfindung beruht auf der Erkenntnis des Anmelders, dass üblicherweise das Ausbringverhalten von Extrudern pulsiert hinsichtlich der Fördervolumina bzw. der Ausstoßgeschwindigkeit. Hingegen werden Strickmaschinen üblicherweise mit konstanter Geschwindigkeit betrieben. Um die Haftung der einzelnen Lagen zueinander optimal auszubilden, müssen diese möglichst spannungsfrei miteinander verbunden werden. Die Erfindung hat hierbei erkannt, dass das Materialverhalten des Ladeluftschlauches optimiert und die Eigenspannungen reduziert werden können, wenn in einem verbesserten erfindungsgemäßen Verfahren über einen Synchronisator eine Anpassung der Ausstoßgeschwindigkeit mindestens eines Extruders an eine Arbeitsgeschwindigkeit mindestens einer Strickmaschine erfolgt. Um hier lediglich ein Beispiel für eine Ausgestaltung eines derartigen Synchronisators zu nennen, kann über einen Sensor eine Fördergeschwindigkeit des Extrudats bzw. der erzeugten Lage erfolgen, diese Fördergeschwindigkeit einer Regelung zugeführt werden, welche dann in Abhängigkeit von der Fördergeschwindigkeit eine Anpassung der Arbeitsgeschwindigkeit der zugeordneten Strickmaschine durchführt. Während eine derartige Regelung Pulsationen der Fördergeschwindigkeit des Extruders hinnimmt und entsprechend die Strickmaschine an diese Pulsationen anpasst, ist es alternativ oder kumulativ auch möglich, dass eine Fördergeschwindigkeit des Extruders geregelt wird, um Pulsationen des Ausbringverhaltens desselben zumindest zu mindern.

Eine Haftung zwischen mindestens einer Gestricklage und der an dieser Gestricklage angrenzenden Lage, insbesondere der außenliegenden Lage, kann erhöht werden, wenn durch eine zusätzliche Heizeinrichtung vor, während oder nach der Erzeugung des Kontakts zwischen angrenzender Lage und Gestricklage über eine Heizeinrichtung eine Temperaturerhöhung der angrenzenden Lage oder der Gestricklage erfolgt.

In weiterer Ausgestaltung der Erfindung erfolgt das Formen der Ladeluftschlauchrohlinge auf einem Dorn bei einer Temperatur in einem Heizkessel von 185°C (± 20 %) über 20 Minuten (± 20 %) bei oder nahe dem Sattdampfdruck.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch einen erfindungsgemäßen Verfahrensablauf zur Herstellung eines Ladeluftschlauches, wobei in Fig. 1a), Fig. 1b) und Fig. 1c) einzelne aneinander anschließende Verfahrensschritte dargestellt sind.
- **Fig. 2**: zeigt in räumlicher Darstellung einen mit einem erfindungsgemäßen Verfahren hergestellten Ladeluftschlauch, wobei einzelne Lagen des Ladeluftschlauches sukzessiv freigelegt sind.
- **Fig. 3**: zeigt ein Gestrick in Ausbildung als "Plainstitch".
- **Fig. 4**: zeigt ein Gestrick in Ausbildung als "Lockstitch"

### FIGURENBESCHREIBUNG

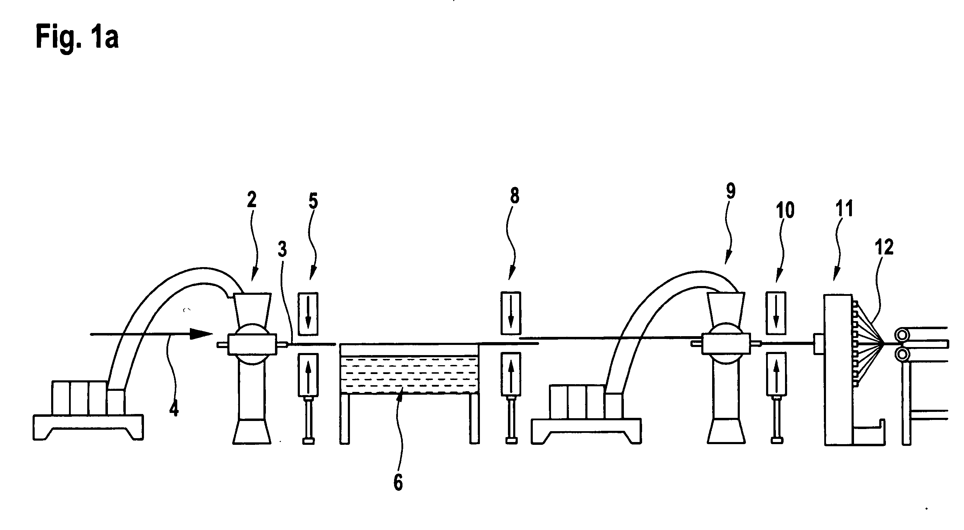

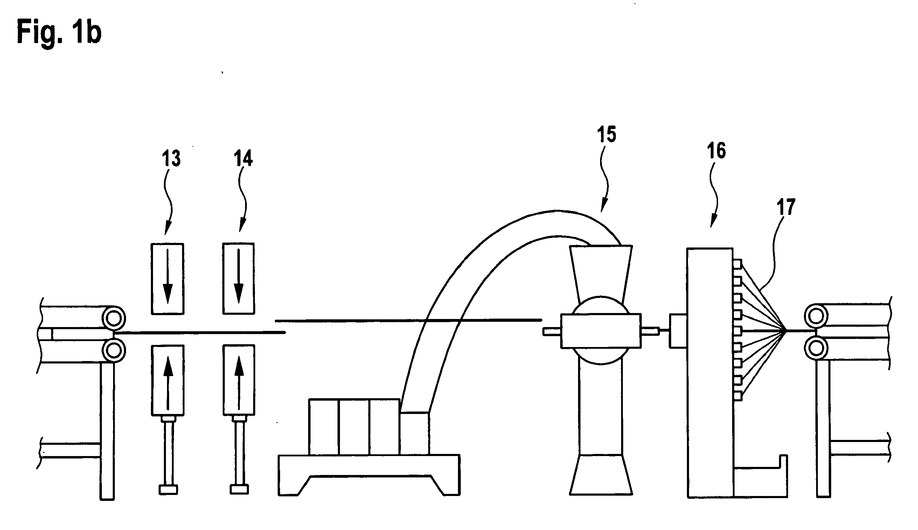

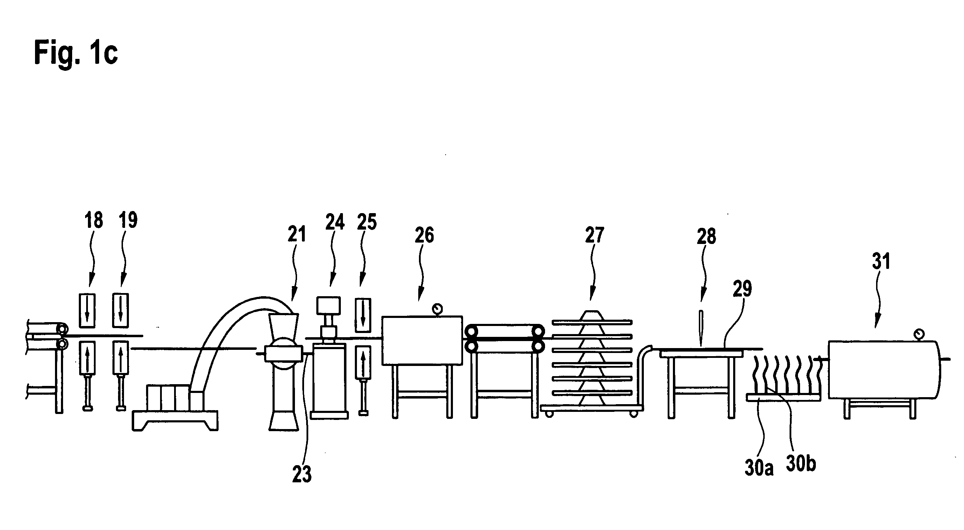

In **Fig. 1** ist mit den Teilfiguren Fig. 1a), Fig. 1b) und Fig. 1c) ein Verfahrensablauf zur Herstellung eines Ladeluftschlauches 1 dargestellt:

In einem Extruder 2 wird zunächst der Inliner 3 mit vorgegebenem Außen- und Innendurchmesser extrudiert. In den hohlzylinderförmigen Innenraum wird über einen pneumatischen Stützkopf ein Stützluft-Luftstrom 4 eingebracht, welche den unter Umständen warmen und weichen Inliner gegen den von außen wirkenden Luftdruck sowie einwirkenden Kräften und Gewichtskräften abstützt und die Innenkontur stabilisiert. Der Inliner 3 wird ausgangsseitig des Extruders durch eine Messeinrichtung 5, insbesondere einen Laser, zwecks Qualitätskontrolle vermessen. Vorzugsweise ist der Inliner aus einem Fluor-Polymer-Kautschuk bzw. Fluorkautschuk (FPM) hergestellt. Anschließend kann der Inliner 3 optional durch ein Haftvermittlerbecken 6 geführt werden, um die Mantelfläche mit dem Haftvermittler zu benetzen. Dies ist insbesondere erforderlich, wenn auf den Inliner 3 im Folgenden eine Innenlage 7 aufgebracht werden soll, welche nicht über das gleiche Vernetzungsprinzip verfügt wie das Material des Inliners, insbesondere FPM. Während in dem dargestellten Haftvermittlerbecken 6 eine Benetzung mit dem Haftvermittler über ein Eintauchen erfolgen kann, kann alternativ ein Haftvermittler auch sprühend aufgebracht werden. Ausgangsseitig des Haftvermittlerbeckens 6 kann der dann mit dem Haftvermittler benetzte Inliner 3 eine weitere Messeinrichtung 8 passieren. In dem folgenden Extruder 9 wird auf die Mantelfläche des Inliners 3, ggf. mit Zwischenordnung des Haftvermittlers, die Innenlage 7 aufgebracht, bei welcher es sich um eine Elastomerlage, insbesondere Silikonlage handelt. Ausgangsseitig des Extruders 9 ist eine weitere Messeinrichtung 10 vorgesehen, welche die Fördergeschwindigkeit von Inliner 3 mit Innenlage 7 oder die Ausbringgeschwindigkeit des Extruders 9 erfasst. Je nach Ausgangssignal der Messeinrichtung 10 erfolgt über einen nicht dargestellten Synchronisator eine Beeinflussung der Drehzahl oder Fördergeschwindigkeit des Extruders 9 und/oder eine Beeinflussung der Arbeitsgeschwindigkeit der nachgeordneten Strickmaschine 11. In der Strickmaschine 11 wird die erste Gestricklage 12 auf die Mantelfläche der Innenlage 7 aufgebracht oder in diese integriert. Das Ausgangsprodukt der Strickmaschine 11 wird gemäß Fig. 1b) ebenfalls mittels einer Messeinrichtung 13, bspw. einer Lichtschranke, erfasst. In einer nachgeordneten Heizeinrichtung 14 erfolgt eine Erwärmung, mittels welcher insbesondere die erste Gestricklage 12 erwärmt wird zur Verbesserung der Anbindung oder Anhaftung der nachfolgend aufgebrachten Lage, hier der Zwischenlage 20. Anschließend wird in einem weiteren Extruder 15 die Zwischenlage 20 aufgebracht, bei welcher es sich vorzugsweise um eine Elastomer- oder Silikonlage handelt. Anschließend wird in einer zweiten Strickmaschine 16 die zweite Gestricklage 17 aufgebracht. Eine Vermessung des Ausgangsprodukts erfolgt über eine weitere Messeinrichtung 18, insbesondere eine Lichtschranke (Fig. 1c)). Wie bereits zuvor für die Heizeinrichtung 14 erläutert kann über eine Heizeinrichtung 19 eine Erwärmung der zweiten Gestricklage 17 erfolgen, über welche die Anbindung der folgenden Lage, hier der Außenlage 22 verbessert wird. In dem nachgeordneten Extruder 21 wird dann die Außenlage 22 aufgebracht, die vorzugsweise auch eine Elastomerlage oder Silikonlage ist. Der derart gebildete kontinuierliche Ladeluftschlauchstrang 23 wird dann einer Prüfstation 24 zwecks Qualitätsüberwachung zugeführt, bei der es sich beispielsweise um eine Röntgen-Prüfstation handeln kann. Anschließend werden in einer Kennzeichnungsstation 25 in die äußere Mantelfläche der Außenlage 22 erforderliche Kennzeichnungen wie eine Markierung des Rohling, Artikelnr., Fertigungsdaten, eine Chargenkennung und ähnliches eingebracht. Optional kann anschließend der Ladeluftschlauchstrang 23 eine Pudermaschine 26 durchlaufen. Ausgangsseitig wird der Ladeluftschlauchstrang 23 einer Turmwickelstation 27 zugeführt, im Bereich derer die Temperatur des Ladeluftschlauchstrangs 23 auf eine gewünschte Temperatur gebracht, insbesondere abgekühlt wird. Dann wird der Ladeluftschlauchstrang 23 in einer Schneidstation 28 zu einzelnen Ladeluftschlauchrohlingen 29 geschnitten, welche dann jeweils einem Dorn 30a, 3b, insbesondere einem Heizdorn, zugeführt werden, auf welchem die Ladeluftschlauchrohlinge 29 dann einer Vulkanisierstation 31 zugeführt werden. Bei der Vulkanisierstation 31 kann es sich um einen Heizkessel handeln, in welchem eine Vulkanisation bei ca. 185°C über ca. 20 min bei Sattdampfdruck erfolgt.

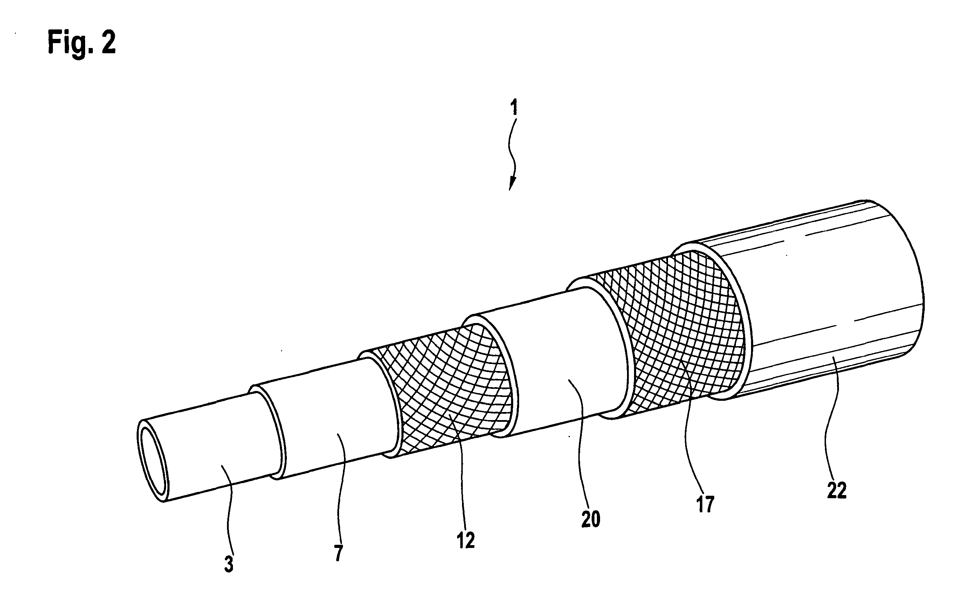

**Fig. 2** zeigt den Ladeluftschlauch 1 mit den in der genannten Reihenfolge radial von innen nach außen aneinander angebundenen oder anhaftenden Lagen, die mit dem Inliner 3, der Innenlage 7, der ersten Gestricklage 12, der Zwischenlage 20, der zweiten Gestricklage 17 und der Außenlage 22 gebildet sind.

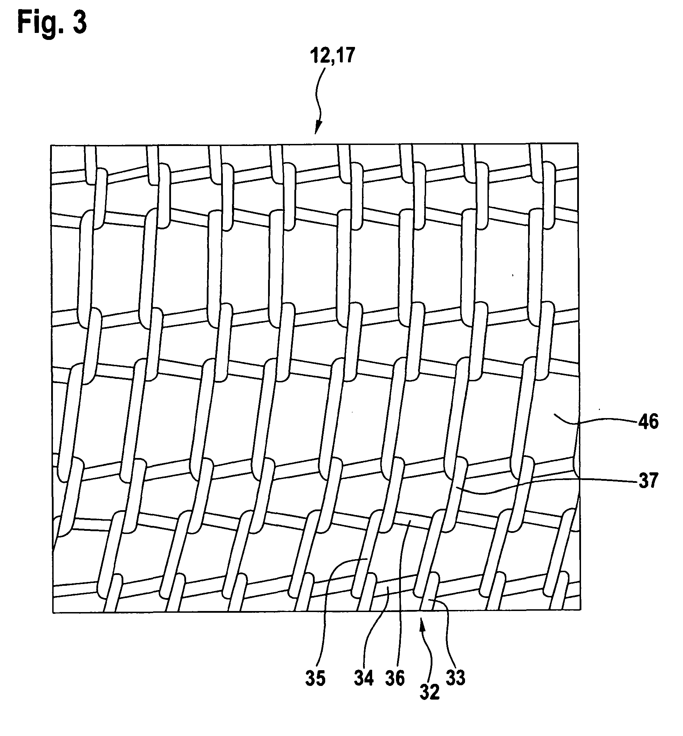

In **Fig. 3** ist vergrößert eine sich um die Mantelfläche der Innenlage 7 bzw. Zwischenlage 20 erstreckende Gestricklage 12 bzw. 17 dargestellt, wobei es sich um den Gewebetyp "Plainstitch" handelt. Hierbei ist in einer Windung 32 der Faden jeweils mäanderförmig mit jeweils ungefähr senkrecht zueinander orientierten Teilfadenbereichen 33-37 verlegt, wobei jeweils in den Übergangsbereichen zwischen benachbarten Teilfadenbereichen Knoten oder Umschlingungen mit dem Faden der benachbarten Windung 32 gebildet sind. Die Teilfadenbereiche 33-37 setzen sich in Umfangsrichtung fort, wobei diese keinen in einer Querebene geschlossenen Faden bilden, sondern vielmehr schrauben- oder spiralförmig um die Längsachse geschlungen sind, so dass einzelne Windungen 32 entstehen, welche jeweils mit den benachbarten Windungen verstrickt sind. Erfindungsgemäß sind die Windungen 32 für die erste Gestricklage 12 und die zweite Gestricklage 17 in unterschiedliche Richtungen orientiert, so dass die Windungen der ersten Gestricklage eine Art Rechtswindung und die der zweiten Gestricklage eine Art Linkswindung bilden (oder umgekehrt).

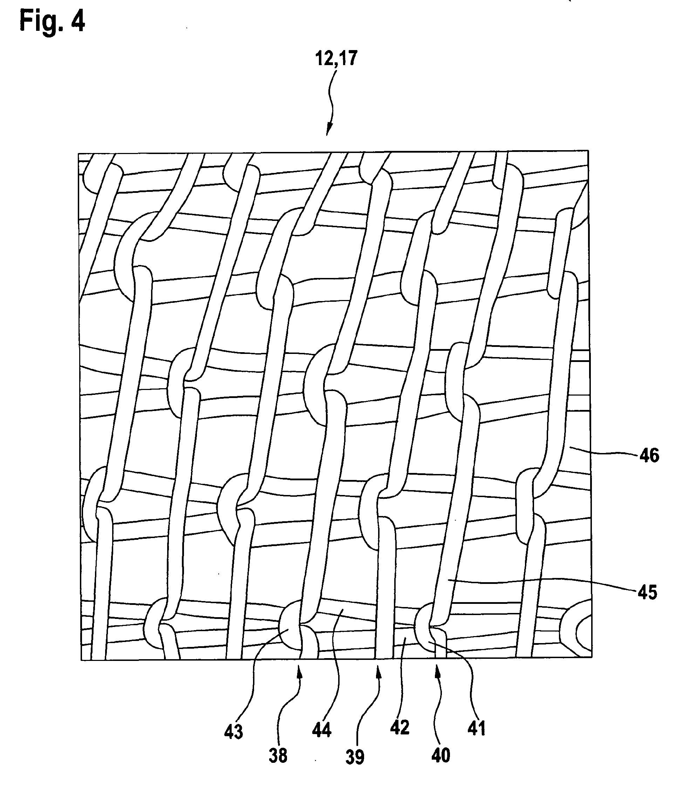

**Fig. 4** zeigt eine im Wesentlichen Fig. 3 entsprechende Darstellung, für welche die dargestellte Gestricklage 12, 17 allerdings als "Lockstitch" ausgebildet ist. Hier sind nebeneinander liegende Windungen 38, 39, 40 vorgesehen, innerhalb welcher jeweils ebenfalls mäanderförmige Teilfadenbereiche 41-45 vorhanden sind. Allerdings sind hier die Knoten der Windung 40 nicht mit der benachbarten Windung 39 gebildet. Vielmehr erstrecken sich die Teilfadenbereiche 42, 44 an der benachbarten Windung 39 vorbei und treten in ihren Endbereichen in Wechselwirkung mit der Windung 38. Auch für diese Ausführungsform der Gestricklagen 12, 17 erstreckt sich die Gestricklage spiralförmig oder schraubenlinienförmig um die Längsachse, wobei erfindungsgemäß die beiden Gestricklagen 12, 17 unterschiedliche und entgegengesetzt zueinander orientierte schraubenförmige Orientierungen haben. Zwischen den einzelnen Teilfadenbereichen sind für beide Gestricktypen gemäß den Fig. 3 und 4 Maschen 46 gebildet.

Vorzugsweise hat der Inliner 3 eine Wandstärke von 1,2 mm und ist aus FPM hergestellt. Die Innenlage 7 ist vorzugsweise aus Silikon (VMQ) hergestellt mit einer Wandstärke von 1,1 mm. Die erste Gestricklage 12 besitzt eine Wandstärke von ca. 0,5 mm, welche sich aber zum Teil im Verlauf des Prozesses von der Extrusion bis zur Vulkanisation verringern kann mit zunehmender Einbettung der Gestricklage in die benachbarten Lagen. Die erste Gestricklage 12 wird überdeckt durch die Zwischenlage 20, bei welcher es sich vorzugsweise um eine Silikonlage (VMQ) mit einer Wandstärke von 1,0 mm handelt. Die darauffolgende zweite Gestricklage 17 mit entgegengesetzter Orientierung zur ersten Gestricklage 12 besitzt eine Wandstärke von 0,5 mm, welche ebenfalls auf dem Weg zur Vulkanisation bis auf 0 abnehmen kann. Schließlich ist die Außenlage 22 vorzugsweise mit einer Wandstärke von 1,5 mm ausgestattet und mit einem Silikonmaterial (VMQ) hergestellt. In bevorzugter Ausgestaltung ist der Innendurchmesser des Inliners 3 bis zu 20 % kleiner als der Außendurchmesser des Heizdorns 30, wobei sich die angegebenen Durchmesserwerte und deren Änderungen vorzugsweise auf die Temperatur beziehen, wenn der Ladeluftschlauchrohling 29 auf den Dorn 30 aufgebracht wird, oder die Verhältnisse bei Raumtemperatur angeben. Beispielsweise hat der Ladeluftschlauchrohling 29 einen Innendurchmesser von 47 mm und wird auf einen Dorn 30 mit einem Außendurchmesser von 59 mm aufgezogen. Die hierdurch herbeigeführte Aufweitung des Ladeluftschlauchrohlings sorgt für eine größtmögliche Vorspannung im Gestrick, um
- die konstruktiv bedingte Dehnung aus dem Gestrick herauszunehmen,
- eine gleichmäßige Vorspannung über beide Gestrickeinlagen herbeizuführen,
- unter Druck und Zugbelastung eine gleichmäßige Spannungsverteilung über beide Gestrickeinlagen zu gewährleisten und
- eine gleichmäßige Kraftaufnahme über beide Gestrickeinlagen zu gewährleisten.

Weiterhin kann die Aufweitung für die feste Einbindung der Gestricklagen 12, 17 in die benachbarten Lagen dienen.

Während Versuche gezeigt haben, dass ein nicht erfindungsgemäß aufgeweiteter Ladeluftschlauchrohling 29 in dem Betrieb in der Brennkraftmaschine eine Umfangsänderung von mehr als 10 % erfahren kann, hat die erfindungsgemäße Aufweitung zur Folge, dass die Umfangsänderung des Ladeluftschlauches 5 % oder weniger beträgt. Die entsprechende verringerte "Atmung" des Ladeluftschlauches 1 im Betrieb führt zu einer verringerten Beanspruchung des Fadens und verringertem Abrieb.

Bei dem verwendeten Garn für die Gestricklagen 12, 17 handelt es sich insbesondere um p-Aramid, m-Aramid oder POD, wobei letztgenanntes Material zu Preisreduktionen für die Gestricklagen 12, 17 führen kann.

DE 602 03 782 schlägt den Einsatz eines Thermoplasts anstelle eines Elastomers für die Ausbildung einer Lage dar. Für derartige Lagen aus einem Thermoplast erfolgt keine chemische Vernetzung der einzelnen Lagen, sondern vielmehr eine Verflüssigung mit einer Temperaturerhöhung. Derartige Lagen aus einem Thermoplast sind in den üblichen Temperaturbereichen üblicherweise verhältnismäßig hart ausgebildet. Weiterhin findet hier Einsatz ein Kernrohr aus PA, welches nicht formbar ist. Problematisch ist für Ladeluftschläuche 1 die Anbindung an Flansche, bei welchen ein radiales Verpressen der Schlauchquerschnitte bzw. der Lagen erfolgt, was zur Folge hat, dass die Innenlage 7, die Zwischenlage 20 und die Außenlage 22 gegen Verdickungen gepresst werden, die von den Knoten der Gestricklage gebildet sind. In Folge der unterschiedlichen Festigkeiten und Dehnungen der Elastomerlagen einerseits und der Gestricklagen andererseits kann es zu Beeinträchtigungen, insbesondere Rissen in den Elastomerlagen kommen, die letztendlich zu einem mechanischen Versagen und zu Undichtigkeiten führen können. Erfindungsgemäß können die Gestricklagen 12, 17 und die Dicken der eingesetzten Garne reduziert werden durch Einsatz von zwei Gestricklagen anstelle einer einzigen Gestricklage, wodurch vorgenannter Effekt zumindest verringert wird.

Möglich ist, dass in Folge der Verwendung von zwei Gestricklagen eine Gesamtwandstärke des Ladeluftschlauches 1 gegeben ist, die größer ist als die von herkömmlichen Schläuchen und auch größer ist als der radiale Einbauringspalt von Standard-Flanschen. In diesem Fall kann eine spanabhebende Nachbearbeitung der Mantelfläche in den Endbereichen der Ladeluftschläuche 1 erfolgen, womit diese durch Verringerung der Dicke der Außenlage 22 auf die erforderliche Wandstärke gebracht werden können.

Für die erste und zweite Gestricklage können beliebige gleiche oder unterschiedliche Garne mit gleichen oder unterschiedlichen Durchmessern eingesetzt werden, wie diese an sich aus dem Stand der Technik bekannt sind. In weiterer Ausgestaltung der Erfindung findet als Garn für mindestens eine Gestricklage ein sogenanntes POD-Garn Einsatz. Hierbei kann das Garn ausschließlich mit Polyoxadiazol (POD) und/oder POD-Derivat und/oder POD-Co-Polymer gebildet sein oder aus diesem bestehen. In einer anderen Variante findet eine Werkstoffkombination Einsatz, die besteht aus POD und/oder einem POD-Derivat und/oder einem POD-Ko-Polymeren sowie aus wenigstens einem weiteren textilen Werkstoff oder Garn, der nicht der vorgenannten POD-Gruppe entstammt. In einer weiteren Variante findet ein Garn Einsatz, welches mit POD und/oder einem POD und/oder einem POD-Derivat und/oder einem POD-Co-Polymer sowie aus wenigstens einem weiteren Werkstoff, der nicht einer Textilgruppe entstammt, gebildet ist. Hinsichtlich des Details des Werkstoffs POD wird insbesondere auf die Druckschriften US 7,528,217 B2, RU 2 213 814 C2 und RU 2 213 815 C2 verwiesen. Der weitere textile Werkstoff oder das textile Garn, welches nicht der POD-Gruppe entstammen soll, kann beispielsweise ein synthetisches oder natürliches Polymer sein, insbesondere Polyamid, Polyester, Aramid (m-Aramid oder p-Aramid), Reyon, Polyethylentherephthalat, Polyvenylalkohol, Polyvenylacetat, Polyetheretherketon, Polyethylen-2,6-naphthalat, Polyphenylen, Polyphenylenoxid, Polyphenylensulfid, Polyphylenether, wobei auch Kombinationen der vorgenannten Materialien möglich sind. Der Mengenanteil von POD und/oder dem POD-Derivat und/oder dem POD-Ko-Polymer innerhalb des textilen Hybrid-Systems kann 50 bis 90 Gewichtsprozent, insbesondere 55 bis 80 Gewichtsprozent, betragen. Bei dem weiteren Werkstoff, der nicht einer Textilgruppe entstammt, kann es sich beispielsweise handeln um Metallfasern, Carbonfasern, Glasfasern, Basaltfasern, wobei auch Kombinationen derartiger Fasern miteinander oder mit anderen Materialien möglich sind. Möglich ist, dass ein für mindestens ein Gestrick eingesetztes Garn haftfreundlich präpariert ist, beispielsweise mittels eine Beschichtigungsprozesses mit Resorcin-Formaldehyd-Latex (RFL). Als Garn kann ein Monofil, ein Filamentgarn, aus einem Polymer gesponnen, ein Cordfaden, ein Zwirnfaden, eine Stapelfaser oder ähnliches eingesetzt sein, wobei die Feinheit (Drehung) insbesondere 1000 bis 12.000 dtex betragen kann. Für die Lagen können bekannte Kautschukkomponenten Einsatz finden, insbesondere EPM, EPDM, NBR, HNBR, FKM, CR, NR, SBR, IR, IIR, BIIR, CIIR, BR, CM, CSM, ECO, EVA, ACM, AEM, MQ, VMQ, PVMQ, FVMQ (vgl. DE 10 2006 058 470 A1), MFQ, FFPM, FFKM, PU, wobei auch ein thermoplastisches Vulkanisat mit enthaltener Thermoplastkomponente unter Teilvernetzung Einsatz finden kann.

Hinsichtlich weiterer Details, insbesondere auch zu den mit den vorgenannten Abkürzungen bezeichneten Werkstoffen, wird auf die nicht vorveröffentlichte Patentanmeldung DE 10 2010 017 679.6, an welcher der vorliegende Anmelder als Erfinder beteiligt ist, verwiesen.

### BEZUGSZEICHENLISTE

- 1: Ladeluftschlauch
- 2: Extruder
- 3: Inliner
- 4: Stützluft-Luftstrom
- 5: Messeinrichtung
- 6: Haftvermittlerbecken
- 7: Innenlage
- 8: Messeinrichtung
- 9: Extruder
- 10: Messeinrichtung
- 11: Strickmaschine
- 12: erste Gestricklage
- 13: Messeinrichtung
- 14: Heizeinrichtung
- 15: Extruder
- 16: Strickmaschine
- 17: zweite Gestricklage
- 18: Messeinrichtung
- 19: Heizeinrichtung
- 20: Zwischenlage
- 21: Extruder
- 22: Außenlage
- 23: Ladeluftschlauchstrang
- 24: Prüfstation
- 25: Kennzeichnungsstation
- 26: Pudermaschine
- 27: Turmwickelstation
- 28: Schneidstation
- 29: Ladeluftschlauchrohling
- 30: Dorn
- 31: Vulkanisierstation
- 32: Windung
- 33: Teilfadenbereich
- 34: Teilfadenbereich
- 35: Teilfadenbereich
- 36: Teilfadenbereich
- 37: Teilfadenbereich
- 38: Windung
- 39: Windung
- 40: Windung
- 41: Teilfadenbereich
- 42: Teilfadenbereich
- 43: Teilfadenbereich
- 44: Teilfadenbereich
- 45: Teilfadenbereich
- 46: Masche

## Patentansprüche

1. Verfahren zur Herstellung von Ladeluftschläuchen (1) für Kraftfahrzeuge, bei dem
a) in einem Extrusionsverfahren ein kontinuierlicher Inliner (3) hergestellt wird, dessen zylindrische Innenfläche dornlos pneumatisch geformt, auf einen inneren Durchmesser D₁ gebracht und/oder auf diesem gehalten wird,
b) sukzessive, koaxial und kontinuierlich eine elastomere Innenlage (7), eine erste Gestricklage (12), eine elastomere Zwischenlage (20), eine zweite Gestricklage (17) und eine elastomere Außenlage (22) auf den Inliner (3) aufgebracht werden, womit ein kontinuierlicher Ladeluftschlauchstrang (23) gebildet ist,
c) die erste Gestricklage (12) und die zweite Gestricklage (17) in dem Ladeluftschlauchstrang (23) unterschiedliche Orientierungen besitzen,
d) die erste Gestricklage (12) und die zweite Gestricklage (17) aus einem endlosen Garn hergestellt werden und
e) nach einem Ablängen von Ladeluftschlauchrohlingen (29) von dem kontinuierlichen Ladeluftschlauchstrang (23) die Ladeluftschlauchrohlinge (29) mittels eines Dorns (30) geformt werden,
ea) dessen Durchmesser D₂ zumindest in einem Längsabschnitt um mindestens 6 % größer ist als der Durchmesser D₁ und
eb) dessen Längsachse gekrümmt ist.

2. Verfahren nach Anspruch 1, **dadurch gekennzeichnet, dass** in den Endbereichen der Ladeluftschlauchrohlinge (29) eine materialabhebende Nachbearbeitung erfolgt, mittels welcher der Innen- und/oder Außendurchmesser der Ladeluftschlauchrohlinge (29) auf einen gewünschten Kupplungsdurchmesser verringert wird.

3. Verfahren nach einem der vorhergehenden Ansprüche, **dadurch gekennzeichnet, dass** als Garn für mindestens eine Gestricklage (12, 17) ein POD-Garn verwendet wird.

4. Verfahren nach einem der vorhergehenden Ansprüche, **dadurch gekennzeichnet, dass** eine Anbindung des Inliners (3), der elastomeren Innenlage (7), der ersten Gestricklage (12), der elastomeren Zwischenlage (20), der zweiten Gestricklage (17) und/oder der elastomeren Außenlage (22) ohne Einsatz eines Haftvermittlers erfolgt.

5. Verfahren nach einem der vorhergehenden Ansprüche, **dadurch gekennzeichnet, dass** der Inliner (3) aus einem FPM-Material extrudiert wird.

6. Verfahren nach einem der vorhergehenden Ansprüche, **dadurch gekennzeichnet, dass** die Innenlage (7), die Zwischenlage (20) und/oder die Außenlage (22) aus einem Silikonmaterial extrudiert werden.

7. Verfahren nach einem der vorhergehenden Ansprüche, **dadurch gekennzeichnet, dass** für die erste und/oder die zweite Gestricklage (12; 17) ein endloses Garn
a) mit einer Dicke im Bereich von 0,4 bis 0,6 mm,
b) mit jeweils 3000 bis 6000 dtex je Gestricklage (12;17) und/oder
c) mit mehr als 10000 detx für beide Gestricklagen (12; 17) zusammen verwendet wird.

8. Verfahren nach einem der vorhergehenden Ansprüche, **dadurch gekennzeichnet, dass** die erste und/oder die zweite Gestricklage (12; 17) als Plainstitch ausgeführt ist/sind.

9. Verfahren nach einem der vorhergehenden Ansprüche, **dadurch gekennzeichnet, dass** die erste und/oder die zweite Gestricklage (12; 17) als Lockstitch ausgeführt ist/sind.

10. Verfahren nach einem der vorhergehenden Ansprüche, **dadurch gekennzeichnet, dass**
a) der Inliner (3) eine Wandstärke von 1,2 mm besitzt,
b) die Innenlage (7) eine Wandstärke von 1,1 mm besitzt,
c) die Zwischenlage (20) eine Wandstärke von 1,0 mm besitzt und
d) die Außenlage (22) eine Wandstärke von 1,5 mm besitzt
oder die Wandstärken von Inliner (3), Innenlage (7), Zwischenlage (20) und Außenlage (22) maximal um 20 % von den vorgenannten Wandstärken abweichen.

11. Verfahren nach einem der vorhergehenden Ansprüche, **dadurch gekennzeichnet, dass** über einen Synchronisator eine Anpassung der Ausstoßgeschwindigkeit mindestens eines Extruders (2; 9; 15; 21) an eine Arbeitsgeschwindigkeit mindestens einer Strickmaschine (11; 16) erfolgt.

12. Verfahren nach einem der vorhergehenden Ansprüche, **dadurch gekennzeichnet, dass** durch eine Heizeinrichtung (14; 19) die Temperatur einer Gestricklage (12; 17) erhöht wird, wodurch die Haftung zwischen der Gestricklage (12; 17) und der anschließend aufgebrachten Lage (Zwischenlage 20: Außenlage 22) erhöht wird.

13. Verfahren nach einem der vorhergehenden Ansprüche, **dadurch gekennzeichnet, dass** das Formen der Ladeluftschlauchrohlinge (29) auf einem Dorn (30) bei einer Temperatur in einem Heizkessel von 185° C ± 20 % über 20 min ± 20 % bei oder nahe dem Sattdampfdruck erfolgt.

14. Ladeluftschlauch (1), hergestellt mit einem Verfahren nach einem der Ansprüche 1 bis 13.

## Claims

1. Process for producing charge-air hoses (1) for motor vehicles, in which
a) in an extrusion process, a continuous inliner (3) is produced, the cylindrical inner face of which is shaped pneumatically in a mandrel-free manner, brought to an inside diameter D₁ and/or held at this,
b) an elastomeric inner ply (7), a first knit ply (12), an elastomeric intermediate ply (20), a second knit ply (17) and an elastomeric outer ply (22) are applied to the inliner (3) successively, coaxially and continuously, with the result that a continuous charge-air hose section (23) is formed,
c) the first knit ply (12) and the second knit ply (17) possess different orientations in the charge-air hose section (23),
d) the first knit ply (12) and the second knit ply (17) are produced from an endless yarn, and
e) after charge-air hose blanks (29) have been cut to length from the continuous charge-air section (23), the charge-air hose blanks (29) are shaped by means of a mandrel (30),
ea) the diameter D₂ of which is at least 6% larger than the diameter D₁ at least in a longitudinal portion, and
eb) the longitudinal axis of which is curved.

2. Process according to Claim 1, **characterized in that**, in the end regions of the charge-air hose blanks (29), material-removing remachining takes place, by means of which the inside diameter and/or outside diameter of the charge-air hose blanks (29) are/is reduced to a desired coupling diameter.

3. Process according to one of the preceding claims, **characterized in that** the yarn used for at least one knit ply (12, 17) is a POD yarn.

4. Process according to one of the preceding claims, **characterized in that** a tie-up of the inliner (3), of the elastomeric inner ply (7), of the first knit ply (12), of the elastomeric intermediate ply (20), of the second knit ply (17) and/or of the elastomeric outer ply (22) takes place without the use of an adhesion promoter.

5. Process according to one of the preceding claims, **characterized in that** the inliner (3) is extruded from an FPM material.

6. Process according to one of the preceding claims, **characterized in that** the inner ply (7), the intermediate ply (20) and/or the outer ply (22) are extruded from a silicone material.

7. Process according to one of the preceding claims, **characterized in that** an endless yarn
a) with a thickness in the range of 0.4 to 0.6 mm,
b) in each case with 3000 to 6000 dtex per knit ply (12; 17) and/or
c) with more than 10 000 dtex together for both knit plies (12; 17) is used for the first and/or the second knit ply (12; 17).

8. Process according to one of the preceding claims, **characterized in that** the first and/or the second knit ply (12; 17) are/is formed as plain stitch.

9. Process according to one of the preceding claims, **characterized in that** the first and/or the second knit ply (12; 17) are/is formed as lock stitch.

10. Process according to one of the preceding claims, **characterized in that**
a) the inliner (3) possesses a wall thickness of 1.2 mm,
b) the inner ply (7) possesses a wall thickness of 1.1 mm,
c) the intermediate ply (20) possesses a wall thickness of 1.0 mm and
d) the outer ply (22) possesses a wall thickness of 1.5 mm
or the wall thicknesses of the inliner (3), inner ply (7), intermediate ply (20) and outer ply (22) deviate at most by 20% from the abovementioned wall thicknesses.

11. Process according to one of the preceding claims, **characterized in that** adaption of the ejection rate of at least one extruder (2; 9; 15; 21) to a working speed of at least one knitting machine (11; 16) is carried out via a synchronizer.

12. Process according to one of the preceding claims, **characterized in that** the temperature of a knit ply (12; 17) is increased by a heating device (14; 19), with the result that adhesion between the knit ply (12; 17) and the subsequently applied ply (intermediate ply 20: outer ply 22) is increased.

13. Process according to one of the preceding claims, **characterized in that** the shaping of the charge-air hose blanks (29) takes place on a mandrel (30) in a boiler at a temperature of 185°C ± 20% for 20 minutes ± 20% at or near the saturated steam pressure.

14. Charge-air hose (1), produced by means of a process according to Claims 1 to 13.

## Revendications

1. Procédé de fabrication de tuyaux d'air de suralimentation (1) pour véhicules automobiles, dans lequel
a) une garniture intérieure continue (3) est fabriquée dans un procédé d'extrusion, dont la surface interne cylindrique est formée pneumatiquement sans mandrin, est amenée à un diamètre intérieur D₁ et/ou est maintenue à ce diamètre,
b) successivement, coaxialement et en continu, une couche interne élastomère (7), une première couche tricotée (12), une couche intermédiaire élastomère (20), une deuxième couche tricotée (17) et une couche externe élastomère (22) sont appliquées sur la garniture intérieure (3), avec lesquelles un boudin de tuyau d'air de suralimentation continu (23) est formé,
c) la première couche tricotée (12) et la deuxième couche tricotée (17) possèdent des orientations différentes dans le boudin de tuyau d'air de suralimentation (23),
d) la première couche tricotée (12) et la deuxième couche tricotée (17) sont fabriquées à partir d'un fil sans fin et
e) après un découpage à la longueur des ébauches de tuyau d'air de suralimentation (29) à partir du boudin de tuyau d'air de suralimentation continu (23), les ébauches de tuyau d'air de suralimentation (29) sont formées au moyen d'un mandrin (30),
ea) dont le diamètre D₂ est supérieur d'au moins 6 % au moins dans une section de longueur au diamètre D₁ et
eb) dont l'axe longitudinal est courbe.

2. Procédé selon la revendication 1, **caractérisé en ce que** dans les régions d'extrémité des ébauches de tuyau d'air de suralimentation (29) est réalisé un post-traitement avec enlèvement de matière, au moyen duquel le(s) diamètre(s) intérieur et/ou extérieur des ébauches de tuyau d'air de suralimentation (29) est/sont réduit(s) à un diamètre d'accouplement souhaité.

3. Procédé selon l'une quelconque des revendications précédentes, **caractérisé en ce que** l'on utilise comme fil pour au moins une couche tricotée (12, 17) un fil de POD.

4. Procédé selon l'une quelconque des revendications précédentes, **caractérisé en ce qu'**une liaison de la garniture intérieure (3), de la couche interne élastomère (7), de la première couche tricotée (12), de la couche intermédiaire élastomère (20), de la deuxième couche tricotée (17) et/ou de la couche externe élastomère (22) s'effectue sans l'utilisation d'un promoteur d'adhésion.

5. Procédé selon l'une quelconque des revendications précédentes, **caractérisé en ce que** la garniture intérieure (3) est extrudée à partir d'un matériau FPM.

6. Procédé selon l'une quelconque des revendications précédentes, **caractérisé en ce que** la couche interne (7), la couche intermédiaire (20) et/ou la couche externe (22) sont extrudées à partir d'un matériau à base de silicone.

7. Procédé selon l'une quelconque des revendications précédentes, **caractérisé en ce que** pour la première et/ou la deuxième couche tricotée (12 ; 17), on utilise un fil sans fin
a) avec une épaisseur de l'ordre de 0,4 à 0,6 mm,
b) avec à chaque fois 3000 à 6000 dtex par couche tricotée (12 ; 17) et/ou
c) avec plus de 10000 dtex pour les deux couches tricotées (12 ; 17) ensemble.

8. Procédé selon l'une quelconque des revendications précédentes, **caractérisé en ce que** la première et/ou la deuxième couche tricotée (12 ; 17) est/sont réalisée(s) sous forme de point mousse.

9. Procédé selon l'une quelconque des revendications précédentes, **caractérisé en ce que** la première et/ou la deuxième couche tricotée (12 ; 17) est/sont réalisée(s) sous forme de point noué.

10. Procédé selon l'une quelconque des revendications précédentes, **caractérisé en ce que**
a) la garniture intérieure (3) présente une épaisseur de paroi de 1,2 mm,
b) la couche interne (7) présente une épaisseur de paroi de 1,1 mm,
c) la couche intermédiaire (20) présente une épaisseur de paroi de 1,0 mm et
d) la couche externe (22) présente une épaisseur de paroi de 1,5 mm
ou les épaisseurs de paroi de la garniture intérieure (3), de la couche interne (7), de la couche intermédiaire (20) et de la couche externe (22) s'écartent d'au maximum de 20% desdites épaisseurs de paroi.

11. Procédé selon l'une quelconque des revendications précédentes, **caractérisé en ce qu'**une adaptation de la vitesse d'éjection d'au moins une extrudeuse (2 ; 9 ; 15 ; 21) à une vitesse de travail d'au moins une machine à tricoter (11 ; 16) s'effectue par le biais d'un synchronisateur.

12. Procédé selon l'une quelconque des revendications précédentes, **caractérisé en ce que** la température d'une couche tricotée (12 ; 17) est augmentée par un dispositif de chauffage (14 ; 19), de sorte que l'adhérence entre la couche tricotée (12 ; 17) et la couche appliquée ensuite (couche intermédiaire 20 ; couche externe 22) est augmentée.

13. Procédé selon l'une quelconque des revendications précédentes, **caractérisé en ce que** le formage des ébauches de tuyau d'air de suralimentation (29) a lieu sur un mandrin (30) dans une chaudière à une température de 185°C ± 20% pendant 20 min ± 20% à la pression de vapeur saturée ou à proximité de celle-ci.

14. Tuyau d'air de suralimentation (1), fabriqué par un procédé selon l'une quelconque des revendications 1 à 13.
